# EUROPEAN PATENT APPLICATION

(11) **EP 3 734 450 A1**
(43) Date of publication of application: **04.11.2020**
(21) Application number: 19181758.4
(22) Date of filing: 21.06.2019
(51) Int. Cl.: G06F 9/50, G06F 3/06

(54) **DISTRIBUTOR DATA MAP FOR STORAGE VOLUME REPLICATION ACROSS MULTIPLE DATA CENTERS**

(30) Priority: 30.04.2019 US 201916399694
(71) Applicant: Juniper Networks, Inc., Sunnyvale, CA 94089 (US)
(72) Inventor: ANDRADE, Daiani, Sunnyvale, California 94089 (US); ANDRADE, Bruno, Sunnyvale, California 94089 (US); ECHEGARAY, Daniel, Sunnyvale, California 94089 (US)
(74) Representative: D Young & Co LLP

(57) **Abstract**

An example method includes identifying a storage volume, attaching the storage volume to an application container in which one or more applications are executable, sending, for storage on each of a plurality of different data centers, application data associated with the storage volume, such that the application data is stored and replicated on each of the plurality of different data centers, after sending the application data, determining meta information for each of the plurality of different data centers, and outputting, for display and based on the meta information, a dashboard that includes a graphical representation of the storage volume and, for each of the plurality of different data centers, a graphical element identifying the respective data center. The graphical representation of the storage volume is graphically connected to each of the plurality of graphical elements identifying the respective data center.

## Description

### TECHNICAL FIELD

This disclosure relates to data storage in computer networks.

### BACKGROUND

In a typical data center, a large collection of interconnected servers provide computing and/or storage capacity for execution of various applications. For example, a data center may comprise a facility that hosts applications and services for subscribers or customers of the data center. The data center may, for example, host all of the infrastructure equipment, such as networking and storage systems, redundant power supplies, and environmental controls. In some data centers, clusters of storage systems and application servers are interconnected via a high-speed network fabric provided by one or more tiers of physical network devices, such as switches and routers. Certain sophisticated data centers provide infrastructure spread throughout the world with subscriber support equipment located in various physical hosting facilities.

### SUMMARY

In general, this disclosure describes techniques for identifying meta information (e.g., volume details, volume information, node type, etc.) for different data centers that store replicas of application data associated with a storage volume and outputting a dashboard (e.g., distributor data map) that illustrates a relationship between the storage volume and each of the data centers. The described techniques provide a simple way of managing multiple storage volumes across different data centers by dynamically identifying and presenting a relationship between a storage volume and each of the data centers that store one or more replicas of application data associated with the storage volume.

In one example, a method includes: identifying, by one or more processors, a storage volume, attaching, by the one or more processors, the storage volume to an application container in which one or more applications are executable, sending, by the one or more processors, and for storage on each of a plurality of different data centers, application data associated with the storage volume, such that the application data is stored and replicated on each of the plurality of different data centers, after sending the application data, determining, by the one or more processors, meta information for each of the plurality of different data centers, and outputting, by the one or more processors and for display, based on the meta information, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.

In another example, a computing system includes one or more processors and at least one computer-readable storage medium. The at least one computer-readable storage medium stored instructions that, when executed, cause the one or more processors to: identify a storage volume, attach the storage volume to an application container in which one or more applications are executable, send, for storage on each of a plurality of different data centers, application data associated with the storage volume, such that the application data is stored and replicated on each of the plurality of different data centers, after sending the application data, determine meta information for each of the plurality of different data centers, and output, for display and based on the meta information,, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.

In another example, a computer-readable storage medium stores instructions that are executable by at least one processor to: identify a storage volume, attach the storage volume to an application container in which one or more applications are executable, send, for storage on each of a plurality of different data centers, application data associated with the storage volume, such that the application data is stored and replicated on each of the plurality of different data centers, after sending the application data, determine meta information for each of the plurality of different data centers, and output, for display and based on the meta information, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example system in which data associated with storage volumes attached to application containers may be replicated across multiple different cloud and/or on-premises data centers, in accordance with one or more techniques of the disclosure.
FIGS. 2A-2B are block diagrams illustrating an example storage volume associated with one or more replicated storage elements(s), which is detached from one application container and re-attached to a different application container, in accordance with one or more techniques of the disclosure.
FIG. 3 is a block diagram illustrating further example details of a storage volume, in accordance with one or more techniques of the disclosure.
FIG. 4 is a block diagram illustrating an example computing system, in accordance with one or more techniques of the disclosure.
FIG. 5 is a flow diagram illustrating an example process to determine meta information, in accordance with one or more techniques of the disclosure.
FIG. 6 is a screen diagram illustrating example details of a home screen for a storage volume, in accordance with one or more techniques of the disclosure.
FIG. 7 is a screen diagram illustrating an example screen showing a first dashboard with different panels, in accordance with one or more techniques of the disclosure.
FIG. 8 is a screen diagram illustrating an example screen showing a second dashboard with different panels, in accordance with one or more techniques of the disclosure.
FIG. 9 is a flow diagram illustrating an example process to identify and output, for display, a dashboard for graphically presenting a relationship between a storage volume and each data center that store replicas of application data associated with the storage volume, in accordance with one or more techniques of the disclosure.

### DETAILED DESCRIPTION

In some data centers, a large collection of interconnected servers may provide computing and/or storage capacity for execution of various applications. For instance, a data center may comprise a facility that hosts applications and services for subscribers or customers of the data center, which may comprise a local or remote data center. Storage management systems can be configured for replicating storage data volumes across multiple different data centers, including third-party cloud data centers and on-premises data centers, and for seamlessly detaching and re-attaching these storage volumes to different application containers in the system during execution. As a result, customer systems are capable of seamlessly accessing storage volumes regardless of their storage location and migrating workload containers that access data associated with replicated storage volumes from one data center to another in a seamless fashion.

In some frameworks, the customer system for each of the different data centers summarizes the behavior of the storage allocated for only the respective data center. For example, the customer system may retrieve and display a status and amount of capacity available from a first data center. In this example, the customer system may retrieve and display a status and amount of capacity available from a second data center. However, in addition to being time consuming, such systems may provide a behavior for each of the different data centers at different times, which may prevent the customer system from displaying a real-time behavior of the storage volume.

The present disclosure describes techniques for a monitoring layer configured to retrieve and display statistics and indicators about a storage volume allocated across different data centers. As a result, customer systems configured with the monitor layer may be capable of seamlessly accessing statistics and indicators for different data centers that host data associated with the storage volume and displaying a dashboard that simultaneously illustrates the statistics and indicators for different data centers of the storage volume in real time. For example, the dashboard may present one or more of: a total storage available (e.g., in GigaBytes (GBs) or TeraBytes (TBs), etc.) for the storage volume across different data centers, a storage available (e.g., in GB or TB) for the storage volume across different data centers, a number of data servers available for storing data associated with the storage volume (e.g., a number of unique nodes with disks), a data summary of the chunks of the storage volume, a trash space in a time interval of the storage volume, a number of data chunk copies in a time interval of the storage volume, a number of files and directories available in the storage volume, a number of disks available with their details (e.g., Internet Protocol (IP), path, total space, used space, chunks, damaged files, etc.), a maximum read time and/or a maximum write time, a number of read operations, a number of write operations, or other statistics and indicators for different data centers of the storage volume.

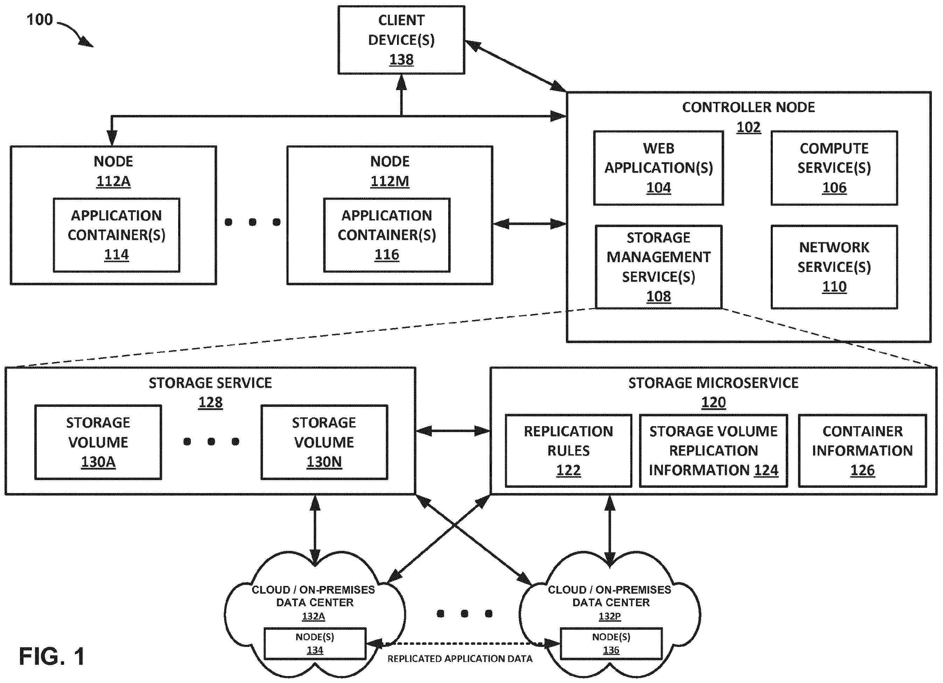

FIG. 1 is a block diagram illustrating an example system 100 in which data associated with storage volumes (e.g., storage volumes 130A-130N, hereinafter "storage volumes 130"), which are attached to application containers (e.g., application containers 114, 116), may be replicated across multiple different cloud and/or on-premises data centers (e.g., data centers 132A-132P, hereinafter "data centers 132"), in accordance with one or more techniques of the disclosure. As illustrated in FIG. 1, data centers 132 may include one or more on-premises (or on-site) data centers, which may be local to a customer or client site (e.g., local to client devices 138, and geographically co-located with client devices 138). Data centers 132 may also include one or more cloud data centers that are remote from the customer or client site and that are provided and/or maintained by one or more respective service providers (e.g., geographically remote from client devices 138). For example, data center 132A may be provided and/maintained by one particular third-party service provider (e.g., service provider "A"), and data center 132P may be provided and/or maintained by a different third-party service provider (e.g., service provider "P"). Each one of data centers 132 may be physically located at one geographical location or distributed among different geographical locations.

In general, one or more of data centers 132 may provide an operating environment for applications and services for nodes that are included in or coupled to the respective data center. One or more of data centers 132 may, for example, host infrastructure equipment, such as networking and storage systems, redundant power supplies, and environmental controls. In some examples, a service provider network that couples nodes to one or more of data centers 132 may be coupled to one or more networks administered by other providers and may thus form part of a large-scale public network infrastructure, e.g., the Internet.

In some examples, data centers 132 may each represent one or more geographically distributed network data centers. Data centers 132 may be facilities that provides network services for customer devices (e.g., one or more client devices 138), which may be, e.g., devices of entities such as enterprises and governments or individuals. For example, a network data center may host web services for several enterprises and end users. Other example services may include data storage, virtual private networks, traffic engineering, file service, data mining, scientific- or super- computing, and so on. In some cases, data centers 132 may include individual network servers, network peers, or otherwise.

In various examples, one or more of data centers 132 may each include a set of storage systems and application servers interconnected via an Internet protocol (IP) fabric, which may comprise a fabric provided by one or more tiers of physical network devices, such as, for example, routers, gateways, switches, hubs, modems, bridges, repeaters, multiplexers, servers, virtual machines running on one or more of the same, and other example network devices. In certain examples, the IP fabric may include three tiers of devices: one or more spine devices, one or more aggregation devices, and one or more leaf devices. Other topologies may be used in other examples. The servers may provide execution and storage environments for applications and data associated with customer devices and may be physical servers, virtual machines or combinations thereof.

As noted above, data centers 132 may include one or more on-premises (or on-site) data centers, which may be local to client devices 138, as well as one or more cloud data centers (e.g., third-party cloud data centers), which are remote from client devices 138. In some cases, data centers 132 include one or more third-party cloud data centers. Each of data centers 132 may include or otherwise be communicatively coupled to one or more nodes, such as control nodes, storage element nodes (e.g., chunk servers), compute nodes, network nodes, and the like. For instance, as shown in FIG. 1, data center 132A includes one or more nodes 134, and data center 132P includes one or more nodes 136.

System 100 illustrated in FIG. 1 also includes one or more client devices 138, a controller node 120, and one or more additional nodes 112A-112M (hereinafter, "nodes 112"). Each of nodes 102 and/or 112 may comprise one or more physical devices, virtual devices, or other entities, such as one or more computing devices, server devices, client devices, virtual machines, or the like. Client devices 138 may be communicatively coupled to controller node 102 and/or nodes 112. In addition, controller node 102 may be communicatively coupled to each of nodes 112.

Controller node 102 may include various different services or applications. As shown in the example of FIG. 1, controller node 120 includes one or more web applications 104, one or more compute services 106, one or more network services 110, and one or more storage management services 108. Each of the services or applications provided by controller node 102 may be implemented or executed in one or more application containers that are deployed by controller node 102. For example, web applications 104 may be executed in one or more web application containers that are deployed by controller node 102. Compute services 106 may be executed in one or more compute service containers deployed by controller node 102. Network services 110 may be executed in one or more network service containers deployed by controller node 102. Storage management services 108 may be executed in one or more storage management containers deployed by controller node 102.

Web applications 104 may include or more web applications that are executable by client devices 138, including applications that provide graphical user interface functionality. Compute services 106 may provide various compute and processing functionality in system 100. Network services 110 may includes networking and network management services to system 100. Storage management services 108 may provide storage management functionality in system 100, including management of storage volumes that are included or otherwise provided by storage management services 108. For example, storage management services 108 may output, for display, a dashboard that includes a graphical representation of one or more of storage volumes 130 and, for each one of data centers 132, a graphical element identifying the respective data centers of data centers 132.

As shown in FIG. 1, storage management services 108 may include storage service 128 and storage microservice 120. Each of storage service 128 and storage microservice 120 may, in some examples, be implemented or executed in one or more application containers. Storage service 128 and storage microservice 120 may provide a persistent data storage layer that is virtually positioned over data centers 132. Through implementation of storage service 128 and storage microservice 120, client devices 138 and nodes 102, 112 may obtain access to data centers 132 and corresponding data center nodes (e.g., nodes 134,136) via this persistent data storage layer. Rather than directly accessing data that is stored on data centers 132, client devices 138 and nodes 102, 112 may access virtual data referred to as storage volumes 130, which are associated with data stored directly on data centers 132. These storage volumes 130 are provided by storage service 128, and storage volumes 130 may be attached to individual application containers, such as application containers 114 or 116, which may then access any attached storage volumes 130 for data read and/or write operations for application data that is associated with the respective storage volumes. Storage volumes 130 may be associated with an amount of virtual, collective storage data provided by data centers 132. For example, if data centers 132 collectively provide 100 terabytes (TB) of data that is allocated in system 100, storage volumes 130 collectively may be associated with this 100 TB of data and may enable virtual access to such data by client devices 138 and nodes 102, 112.

Storage microservice 120 implements replication rules 122 that enable the replication of data associated with storage volumes 130 across the multiple different data centers 132, and for seamlessly detaching and re-attaching these storage volumes 130 to different application containers (e.g., application containers 114, 116) during execution. For instance, in some examples, storage service 128 may create a particular storage volume (e.g., storage volume 130A), where storage volume 130A is, in certain examples, attachable to only one application container at a time (e.g., only one of application containers 114, 116).

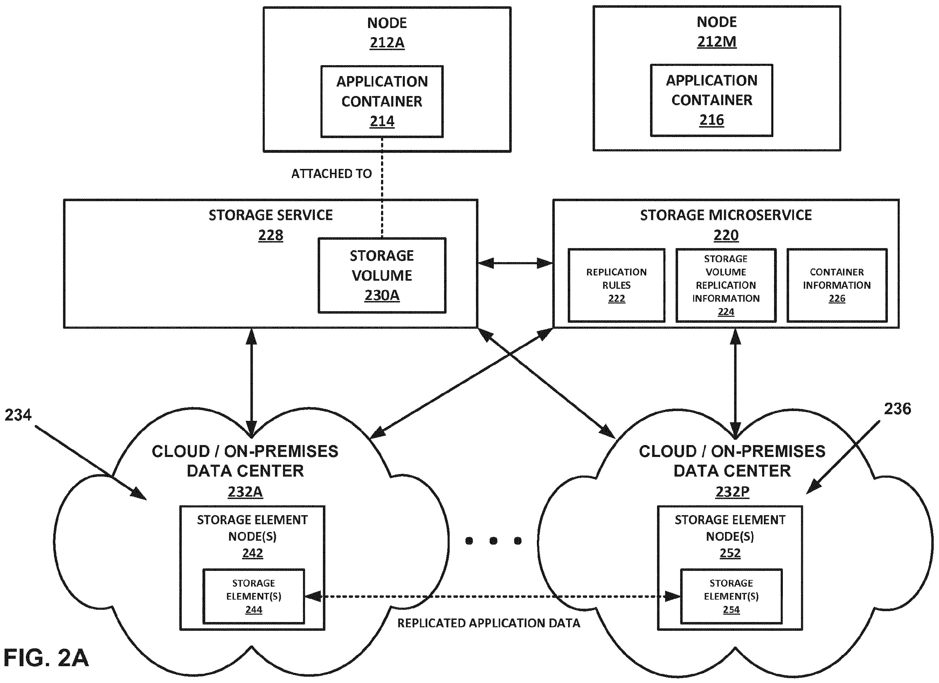

Storage service 128 may, in some instances, create storage volume 130A responsive to receiving user input from client devices 138 via web applications 104 to create the volume, and/or responsive to a request from an individual node or container (e.g., node 112A or container 114). Although not shown in FIGS. 2A-2B, in some examples, storage volume 230A may be attachable to more than one application container at a time (e.g., attached to both application container 214 and application container 216 at the same time).

In some examples, creation of the particular storage volume may include storage service 128 identifying the particular storage volume. However, in some examples, storage service 128 may identify the particular storage volume without creating the particular storage volume. For instance, storage service 128 or another device may create the particular storage volume, and, storage service 128 may identify the particular storage volume after creation of the particular storage volume.

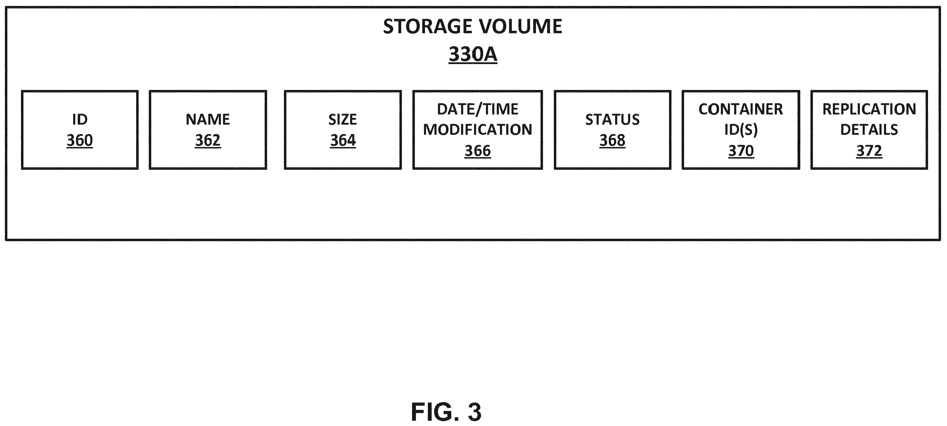

Storage service 128 or an application container may then attach storage volume 130A to the application container in which one or more applications are executable. For example, node 112A may comprise a virtual machine that is executed by client devices 138 or controller node 102 (e.g., by web applications 104, compute services 106, storage management services 108, or network services 110). Node 112A may include an application container 114 for providing workload functionality, and application container 114 may include one or more workload applications that are implemented during deployment of node 112A. Storage volume 130A may be attached to application container 114. For example, an application executing in container 114 may require the use of storage data during execution. Container 114 or client devices 138, via web applications 104, may request the attachment of storage volume 130A to application container 114. When storage volume 130A is attached to application container 114, a unique identifier of storage volume 130A map be mapped to a unique identifier of application container 114, and this mapping may be stored in container information 126. Container information 126 may include data structures that map the identifiers of different containers in system 100 to the identifiers of storage that are currently attached to those containers. In some cases, each individual container may include a list of the identifiers of all storage volumes to which it is attached. Similarly, in some cases, each storage volume may include a list of identifiers of all containers (e.g., container ID's 370 shown in FIG. 3) to which it is attached.

Storage service 128 or storage microservice 120 may determine a replication rule from replication rules 122 that is associated with storage volume 130A. Each of replication rules 122 may be defined by client devices 138, via web applications 104, to identify which ones of data centers 132 are to store replicated data associated with each of storage volumes 130. Each individual storage volume of storage volumes 130 is associated with a particular replication rule of replication rules 122. Storage service 128 or storage microservice 120 may determine the specific replication rule of replication rules 122 that is associated with storage volume 130A, where the replication rule identifies which ones of data centers 132 on which to store information (e.g., application data) associated with storage volume 130A. In some cases, client devices 138 may associate a replication rule with a storage volume (e.g., one of storage volumes 130) when a replication rule and/or storage volume is created. In some cases, a replication rule may be dynamically associated with a storage volume at any point prior to deletion of the rule or storage volume. A storage volume may, in many examples, be exclusively associated with only one replication rule at any given time. The association of replication rules to storage volumes may be stored, in some examples, e.g., in a data structure, and determining the replication rule may include determining by reference to the data structure. In certain examples, a replication rule may specify that a particular storage volume (e.g., storage volume 130A) is to be replicated within a given data center (e.g., data center 132A). Because a given data center may include multiple nodes (e.g., nodes 134 of data center 132A, nodes 136 of data center 132P), located at one or more geographical locations, any given replication rule may specify that, for redundancy, a storage volume may be replicated multiple times across different nodes (e.g., servers) of one given data center.

During execution of the one or more applications in application container 114, storage service 128 may receive application data associated with storage volume 130A from application container 114. In response to receiving such application data, storage service 128 may send, for storage on each of the different data centers 132 (e.g., identified by the replication rule), the application data associated with storage volume 130A. In such fashion, the application data is stored and replicated on each of the identified ones of data centers 132A (e.g., using the nodes of data centers 132, such as nodes 134 and/or nodes 136 illustrated in FIG. 1).

In sending application data associated with storage volume 130A to the identified ones of data centers 132 for replication, storage service 128 may access storage volume replication information 124 from storage microservice 120. Storage volume replication information 124 may include information identifying where data associated with storage volumes 130 is to be stored on each individual one of data centers 132, as will be described in further detail below. For example, the replication rule of rules 122 indicates that storage volume 130A is to be replicated on data center 132A and data center 132P, storage volume replication information 124 may identify a location at which application storage data associated with storage volume 130A is to be specifically stored on data center 132A (e.g., one or more locations associated with nodes 134) and on data center 132P (e.g., one or more locations associated with nodes 136).

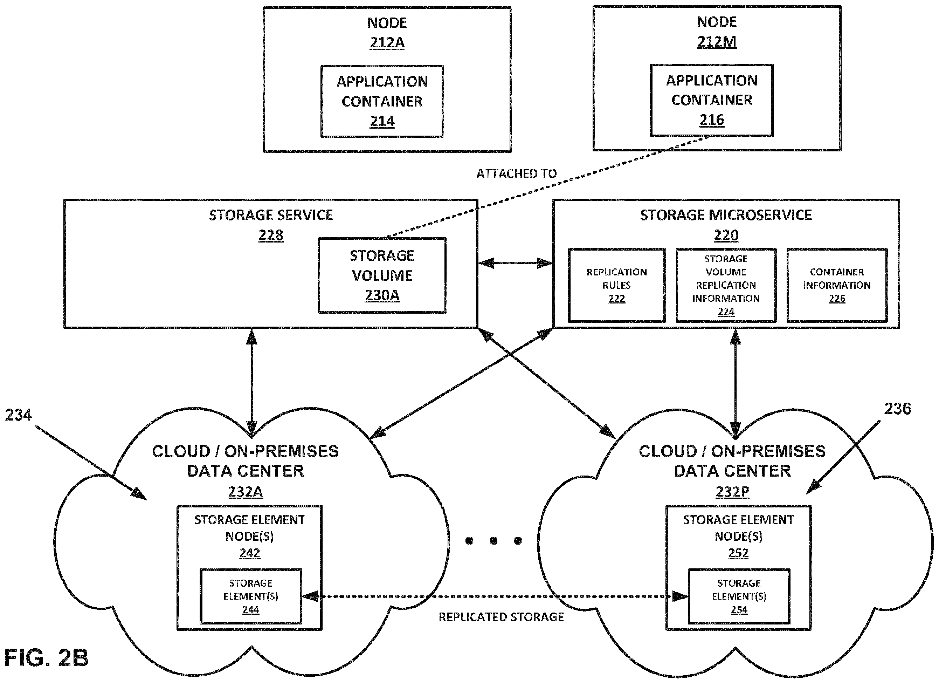

Storage microservice 120 may also include container information 126, which includes information about containers that are deployed by nodes 102, 112, as well as information indicating which particular ones of storage volumes 130 are attached to each individual application container. For example, container information 126 may include data structures that map the identifiers of containers to the identifiers of storage volumes (e.g., ID 360 of example storage volume 330A) that are currently attached to those containers. As will be described further in references to FIGS. 2A and 2B, individual ones of storage volumes 130 may be individually attached to or detached from application containers during execution, and the replication rules that are associated with storage volumes dictate how the data is replicated across multiple different ones of data centers 132.

After sending the application data, storage servicel28 may determine meta information for each of the plurality of different data centers. Examples of meta information may include, for example, but is not limited to, an identifier (e.g., ID) of a storage volume, a name of the storage volume, a size of the storage volume, a date and/or time of a last modification of the storage volume, a status of the storage volume, associated containers ID's of the storage volume, replication details of the storage volume, or other meta information.

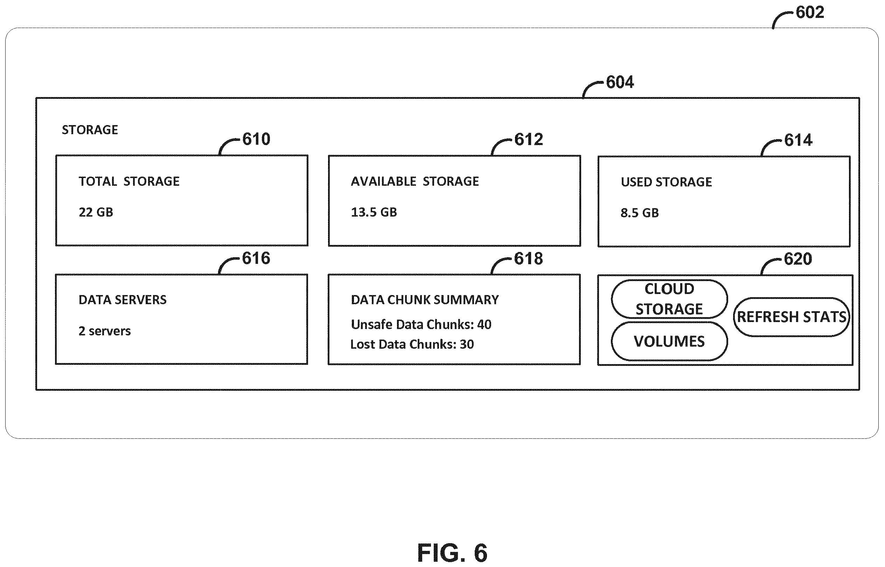

Storage servicel28 may output, for display, based on the meta information, a dashboard (see FIGS. 6-8) that includes a graphical representation of the particular storage volume (e.g., storage volume 130A) and, for each of data centers 132, a graphical element identifying the respective data center. In some examples, the graphical representation of the particular storage volume is graphically connected to each of the plurality of graphical elements identifying the respective data center.

Thus, system 100 implements replication rules 122 that replicates data associated with storage volumes 130 across multiple different data centers 132, such as third-party cloud and/or on-premises data centers, and implements storage management services 108 that enables a display of a dashboard for statistics and indicators about storage volume 130A allocated across different data centers 132. The described techniques provide a simple way of managing multiple storage volumes 130 across different data centers 132 by easing the processes of retrieving and displaying statistics and indicators for storage volumes 130 that may be deployed on one or more computing nodes 112 (e.g., virtual machines). The techniques may be used to support a container-centric cloud computing environment, such as that described in U.S. Application No. 16/118,107, filed August 30, 2018, which is incorporated herein by reference in its entirety.

FIGS. 2A-2B are block diagrams illustrating an example storage volume 230A associated with one or more replicated storage elements(s) that is detached from one application container 214 and re-attached to a different application container 216, in accordance with one or more techniques of the disclosure. In the particular example of FIGS. 2A-2B, the illustrated system may be one example of system 100 shown in FIG. 1. For instance, node 212A and application container 214 may be one example of node 112A and one of application containers 114; node 212M and application container 216 may be one example of node 112M and one of application containers 116; storage service 228 may be one example of storage service 128; storage microservice 220 may be one example of storage microservice 120; and cloud/on-premises data centers 232A-232P (hereinafter, "data centers 232") may be one example of data centers 132.

FIGS. 2A-2B also illustrate an example of storage volume 230A, which may be one example of storage volume 130A shown in FIG. 1. Although only one example storage volume 230A is shown in FIGS. 2A-2B, any number of storage volumes may be attached and re-attached to different application containers according to the techniques described herein. Furthermore, a given application container, such as application container 214 or 216, may be attached to multiple different storage volumes at any given time. In FIG. 2A, storage volume 230A is provided by storage service 228 and is initially attached to application container 214 in node 212A. In certain examples, node 212A may be a virtual machine that is instantiated by a controller node (e.g., controller node 102 shown in FIG. 1), application container 214 may be a workload container that includes one or more executable applications that perform various tasks, and storage volume 230A may be used to store data (e.g., database data, image data) that is used by one or more of the applications executing in application container 214. In some cases, input from a user or client device (e.g., one of client devices 138 in FIG. 1) may initiate the creation of storage volume 230A and its attachment to application container 214 (e.g., via web applications 104 of controller node 102, as described above in reference to FIG. 1). As will be described in further detail below, storage volume 230A may have various attributes or features, such as name and/or identifier, a date/time of last modification, a status, replication details, and/or other attributes.

As illustrated in FIG. 2A, storage microservice 220 includes replication rules 222, storage volume replication information 224, and container information 226. Replication rules 222 may be one example of replication rules 122 in FIG. 1, storage volume replication information 224 may be one example of storage volume replication information 124 in FIG. 1, and container information 226 may be one example of container information 126 in FIG. 1. Similar to storage microservice 120 in FIG. 1, storage microservice 220 may determine a particular replication rule from replication rules 222 that is associated with storage volume 230A. In some cases, a user or client device may provide input to define the replication rule and assign the rule to storage volume 230A. In the example of FIGS. 2A-2B, the replication rule may identify at least data center 232A and data center 232P as data centers on which to store information associated with storage volume 230A. Each of data centers 232A and 232P may be a third-party cloud or an on-premises data center. An on-premises data center is one that is at least partially co-located with or local to a client device's site, and may be operated by the same enterprise as operates the client device, and a third-party cloud data center is remote from the client's site and may be operated by a different entity or service provider, independent from an entity that operates the client device.

Storage volume replication information 224 includes information about where information associated with storage volume 230A is replicated for storage on data centers 232A and 232P, as further described below. Container information 226 includes association information identifying which storage volumes are attached to particular application containers. Container information 226 may initially include information indication that storage volume 230A is attached to application container 214.

In some cases, node 212A and/or a controller node (e.g., controller node 102 in FIG. 1) may configure application container 214. This configuration may be based on user input received from a client device (e.g., one of client devices 138). Node 212A and/or the controller node may also deploy container 214 for executing the one or more applications in application container 214. In some examples, when application container 214 is configured or deployed, a determined replication rule from replication rules 222 may become attached or associated with storage volume 230A. In certain examples, the determined replication rule becomes attached or associated with storage volume 230A at the time when storage volume 230A is initially created.

During execution of an application in application container 214, the application may create or identify application data for storage in storage volume 230A. The previously identified replication rule from replication rules 222, which is associated with storage volume 230A, determines that each of data centers 232A and 232P will store a replicated version of the application data associated with storage volume 230A. Storage service 228 and/or storage microservice 220 manage the replicated storage of this application data by sending this data to each of data centers 232A and 232P for storage.

As shown in FIGS. 2A and 2B, each of data centers 232A and 232P include one or more storage element nodes and storage elements. For example, data center 232A includes one or more storage elements nodes 242, which includes one or more storage elements 244. Data center 232P includes one or more storage element nodes 252, which includes one or more storage elements 254. Storage elements nodes 242 comprise one or more nodes that are configured to manage the storage of storage elements 244 for data center 232A, and storage element nodes 252 comprise one or more nodes that are configured to manage the storage of storage elements 254. In certain examples, storage element nodes 242, 252 may include one or more chunk servers, and storage elements 244, 254 may include one or more chunks of data.

Storage elements 244 and 254 include data storage elements that are associated with storage volume 230A. As noted above, storage service 228 and storage microservice 220 may send the application data from container 214 to each of data centers 232A and 232P, such that this application data is stored and replicated on data centers 232A and 232P. This application data may be stored in one or more of storage elements 244 on data center 232A, and may also be replicated for storage in one or more of storage elements 254 on data center 232P. Storage element nodes 242 may manage the allocation and access of storage elements 244 on data center 232A, and storage element nodes 252 may manage the allocation and access of storage elements 254 on data center 232P. Storage element nodes 242 may identify which ones of storage elements 244 are used to store the application data associated with storage volume 230A, and/or the location of these storage elements 244 on nodes 242, and may provide such information to storage microservice 220. Similarly, storage elements nodes 252 may identify which ones of storage elements 254 are used to store the application data associated with storage volume 230A, and/or the location of these storage elements 254 on nodes 252, and may provide this information to storage microservice 220. In response, storage microservice 220 stores this received information in storage volume replication information 224. As a result, storage volume replication information 224 includes replication information for the application data associated with storage volume 230A, including the details as to where this application data is stored in data center 232A and 232P, and the particular storage elements 244, 254 and/or location of the storage elements 244, 254 that include the replicated application data on data centers 232A and 232P, respectively.

At any point in time during execution of one or more applications in application container 214, the applications may initiate a request to modify the application data associated with storage volume 230A and stored in storage elements 244, 254. For example, one or more applications executing in application container 214 may modify spreadsheet or image application data. In this case, storage service 228 and/or storage microservice 220 may send the modification to the application data associated with storage volume 230A, based on the identified replication rule, to storage element nodes 242 on data center 232A and storage element nodes 252 on data center 232P. As a result, the modification to the application data may be replicated in both data centers 232A and 232P. Storage elements 244 that include the application data on storage element nodes 242 may be updated based on the modification, and storage elements 254 that include the application data on storage element nodes 252 may also be updated based on the modification. In such fashion, the modification to the data is replicated in both data center 232A and data center 232P. Storage element nodes 242, 252 may provide updated storage element information based on the modified application data back to storage microservice 220, which then updates storage volume replication information 224 accordingly.

In addition, at any point in time during execution of one or more applications in application container 214, the applications may initiate a request to delete the application data associated with storage volume 230A and stored in storage elements 244, 254. In this case, storage service 228 and/or storage microservice 220 may send the deletion request for the application data associated with storage volume 230A, based on the identified replication rule, to storage element nodes 242 on data center 232A and storage element nodes 252 on data center 232P. As a result, both storage element nodes 242 and 252 may delete the application data from respective storage elements 244 and 254. Microservice 220 may also update storage volume replication information 224 to indicate that storage volume 230A no longer has any application data stored in data centers 232A, 232P.

Assuming, however, that the application data associated with storage volume 230A has not been deleted, and that it is replicated for storage in storage elements 244 and 254, one or more of the applications executing in application container 214 may request a copy of the stored application data that is associated with storage volume 230A. In some examples, application container 214 or node 212A may send a request for the application data associated with storage volume 230A to storage service 228 or storage microservice 220. Storage microservice 220 may then access storage volume replication information 224 to determine that the application data associated with storage volume 230A is replicated for storage on both data center 232A and data center 232P, which is based on the particular replication rule of replication rules 222 that is associated with storage volume 230A.

Based on storage volume replication information 224, storage service 228 or storage microservice 220 may access the application data from either data center 232A or data center 232P. However, in various examples, storage microservice 220 may identify a particular one of data center 232A or data center 232P from which to access the application data based on storage volume replication information 224 and further based on application container 214 currently attached to storage volume 214. As an example, application container 214 may be a designated type of container that is associated with a particular type of data center. For instance, application container 214 may deployed as a type of application container in node 212A that is configured to interact with a particular type of data center (e.g., third-party versus an on-premises data center), or a data center that is provided by a particular service provider (e.g., a third-party data center provided or managed by service provider "A"). Based on the type of application container 214, storage microservice 220 may utilize storage volume replication information 224 to identify one of data center 232A or data center 232P.

As an example, data center 232A may be a third-party cloud data center that is managed by a service provider "A," and data center 2323P may be an on-premises data center. The type of application container 214 (e.g., type "A" associated with a service provider "A") may indicate that it is configured to interact with the third-party cloud data center managed by service provider "A." The type of application container 214 may be indicated or comprise data or metadata that is associated with application container 214. Based on the type information, storage microservice 220 may use storage volume replication information 224 to identify data center 232A for accessing the application data associated with this particular storage volume 230A, and to retrieve, from data center 232A, the application data from storage elements 244 on storage element nodes 242.

In other examples, when one or more of the applications executing in application container 214 requests a copy of the stored application data that is associated with storage volume 230A, storage service 228 and/or storage microservice 220 may provide, in response to the request, storage volume replication information 224 back to application container 214. Using storage volume replication information 224, application container 214 may determine that the application data associated with storage volume 230A is replicated for storage on both data center 232A and 232P, and more particularly, in storage elements 244 and 254 on data centers 232A and 232P, respectively. The type of application container 214 (e.g., type "A" that is associated with service provider "A") may indicate that it is configured to interact with data center 232A, similar to the example above (e.g., if data center 232A is a third-party cloud data center managed by service provider "A"). Application container 214 may identify data center 232A for accessing the application data associated with storage volume 230A, and may retrieve the application data from storage elements 244 on storage element nodes 242 of data center 232A.

In these examples of retrieving data from storage elements 244, storage volume replication information 224 may store or otherwise indicate the particular storage elements 244 that store the replicated application data, and/or the one or more locations in storage elements nodes 242 or storage elements 244 (e.g., chunks) that store the application data on data center 232A. For example, if storage element nodes 242 include one or more chunk servers, and storage elements 244 include one or more data chunks, storage volume replication information 224 may indicate the particular data chunks that include the application data, and/or the locations of the data chunks that collectively include the application data.

At any given point in time, storage volume 230A may become detached from application container 214. For example, application container 214 may be deactivated or deleted from the system or node 212A, in which case storage volume 230A may become detached from application container 214. In another example, a client device (e.g., client device 138 from FIG. 1) may provide input (e.g., via web applications 104 of controller node 102) to request the detachment of storage volume 230A from application container 214. Storage volume 230A may then be attachable to a completely different container, such as illustrated in FIG. 2B.

In FIG. 2B, storage volume 230A has been attached to application container 216 included in node 212M. In some cases, storage volume 230A may become attached to application container 216 based on user input (e.g., input from client device 138). Application container 216 is different from application container 214 and is included in a different node (e.g., node 212M as shown in FIG. 2B). One or more applications are executable in application container 216 on node 212M. In some examples, storage volume 230A may be attachable to only one particularly application container at a given time (e.g., attached to application container 214 in FIG. 2A, attached to application container 216 in FIG. 2B).

As illustrated in FIG. 2B, application container 216 is different from application container 214, and is included in a different node 212M. In some cases, application container 216 may be a different type of container than application container 214. For example, application container 216 may have a type "P" that is associated with on-premises data center. Data center 232P may be an on-premises data center. Based on the type information, storage microservice 220 may use storage volume replication information 224 to identify data center 232P for accessing the replicated application data associated with storage volume 230A that was previously stored on storage elements 254 of data center 232P when storage volume 230A was previously attached to application container 214 (FIG. 2A). Storage service 228 and/or storage microservice 220 may then retrieve, from data center 232P, this application data from storage elements 254 on storage element nodes 252 when any applications executing in application container 216 request this application data for storage volume 230A during execution. In such fashion, because this application data was previously replicated for storage on both data centers 232A and 232P, application container 216 is able to seamlessly access this application data from a completely different data center 232P that is associated with the type of application container 216 (e.g., type "P"), even if application container 216 is of a different type than application container 214, and is associated with or tied to a different type of data center (e.g., on-premises data center versus a third-party cloud data center).

As noted earlier, in certain examples, a replication rule may specify that a particular storage volume (e.g., storage volume 230A) is to be replicated multiple times within a given data center (e.g., data center 232P). Because a given data center may include multiple nodes located at one or more geographical locations, any given replication rule may specify that, for redundancy, storage volume 230A may be replicated multiple times across different nodes 252 (e.g., servers) of data center 232P. Thus, in case one or more nodes 252 of data center 232P become inaccessible, application container 216 may still access the data associated with storage volume 230A via one or more other nodes 252 of data center 232P that are still accessible.

Furthermore, in some cases, application container 216 may access the application data associated with storage volume 230A from a second data center if a first data center is generally inaccessible. For instance, continuing with the example above, it is possible that data center 232P may become temporarily or permanently inaccessible, deactivated, or the like at any given point in time, which may or may not be apparent or known to one or more users of client devices, such as client devices 138. If storage service 228 and/or storage microservice 220 is unable to access data center 232P, these entities may utilize storage volume replication information 224 to identify that the application data associated with storage volume 230A has also been replicated for storage on storage elements of another one of data centers 232. In these cases, although the type of application container 216 may be type "P," application container 216 may still allow or accept data from another one of data centers 232 on which data has been replicated. Thus, storage service 228 and/or storage microservice 220 may then seamlessly access the application data for storage volume 230A from data center 232A for use by application container 216, even when data center 232P is inaccessible. This seamless access may occur even if users of client devices, such as client devices 138, are unaware of the inaccessibility or disruption of data center 232P.

During execution of the group of one or more applications in application container 216, these one or more applications may identify additional application data associated with storage volume 230A that is to be stored. For example, the applications may identify spreadsheet, image, or other new data associated with their execution that is to be stored in storage volume 230A. Storage service 228 and/or storage microservice 220 may identify the particular replication rule from replication rules 222 that is associated with storage volume 230A to determine that this new application data is to be replicated for storage on each of data centers 232A and 232P. Storage service 228 and/or storage microservice 220 may then send, based on the replication rule, and for storage on each of data centers 232A and 232P, the new application data associated with storage volume 230A, such that this new application data is stored and replicated on each of data centers 232A and 232P (e.g., in storage elements 244 of data center 232A and in storage elements 254 of data center 232P). Storage microservice 220 may store the identification of the particular storage elements 244, 254, and/or the locations of storage elements 244, 254 in which the application data is stored, in storage volume replication information 224.

Although not shown in FIGS. 2A-2B, any number of different storage volumes may be attached to a given application container. For example, storage service 228 may store a second storage volume 230B that has been created. In the example of FIG. 2B, this storage volume 230B may also be attached to application container 216. During execution of one or more applications in application container 216, application container 216 may request to store application data in this storage volume 230B. Similar to the techniques described above, storage microservice 220 and/or storage service 228 may determine a particular replication rule that is associated with storage volume 230B, to identify which of data centers 232 on which to replicate the application data associated with storage volume 230B for storage. Upon determining the data centers on which the data is to be replicated (e.g., data centers 232A and 232P), storage service 228 and/or storage microservice 220 may send the application data associated with storage volume 230B for replicated storage on these identified data centers. In some examples, and as will be described in further detail below, a web application (e.g., web application 104 shown in FIG. 1) may output (e.g., to client devices 138) a graphical representation of all containers that are currently attached to any particular storage volume. Thus, in the scenario illustrated in FIG. 2B, the web application may output a graphical representation indicating that application container 216 is currently attached to storage volume 230A.

FIG. 3 is a block diagram illustrating further example details of storage volume 330A, in accordance with one or more techniques of the disclosure. In FIG. 3, storage volume 330A may be one example of storage volume 130A (FIG. 1) and/or storage volume 230A (FIGS. 2A-2B). Storage volume 330A may be attachable to any given application container, such as application container 114 (FIG. 1), application container 116 (FIG. 1), application container 214 (FIGS. 2A-2B), or application container 216 (FIGS. 2A-2B). Storage volume 330A may be stored by a storage service, such as storage service 128 (FIG. 1) or storage service 228 (FIGS. 2A-2B). Storage volume 330A may be associated with application data that is replicated for storage in any number of different data centers, such as any of data centers 132 (FIG. 1) or data centers 232 (FIGS. 2A-2B).

As shown in FIG. 3, storage volume 330A may also have various meta information, such as an ID 360, a name 362, a size 364, a date/time of last modification 366, a status 368, associated containers ID's 370, and replication details 372. ID 360 may specify an identifier (e.g., a unique identifier) of storage volume 330A. For example, ID 360 may comprise a unique alpha-numeric identifier of storage volume 330.

Name 362 may be a name of storage volume 330A. In some cases, name 362 may be a unique name of storage volume 330A. In other examples, name 362 may be a more generic name of storage volume 330A. Name 362 may include alpha-numeric characters.

Size 364 may indicate the size of storage volume 330A. In some cases, storage management services (e.g., storage management services 108 of FIG. 1) may determine ID 360, name 362, and/or size 364 of storage volume 330A. In some cases, these storage management services may determine ID 360, name 362, and/or size 364 based on input from a client device (e.g., client device 138).

Date/time of last modification 366 may indicate the last date/time when storage volume 330A, and/or the application data associated with storage volume 330A, was modified. Status 368 indicates the current status of storage volume 330A. For example, status 368 may indicate whether storage volume 330A is currently in use (e.g., currently attached to one or more containers) or free (e.g., not currently in use and ready to be attached to any container). Container ID's 370 indicate the identifiers of any one or more containers to which storage volume 330A is currently attached. The storage microservice may also store container information (e.g., container information 126 in FIG. 1, container information 226 in FIGS. 2A-2B) that maps the identifiers of containers to the identifiers of storage volumes (e.g., ID 360 of example storage volume 330A) that are currently attached to those containers. And, as also shown in FIG. 3, each individual storage volume, such as storage volume 330A, also includes container ID's of those containers to which it is attached.

Further, storage volume 330A also included replication details 372. Replication details 372 includes information regarding the replication of storage volume 330A, such as information identifying which data centers on which application data associated with storage volume 330A is stored for replication. In some cases, replication details 372 may also include information regarding which particular storage elements (e.g., storage elements 244, 254 from FIGS. 2B-2C) contain the application data for storage volume 330A, and/or the location of these storage elements on the particular nodes (e.g., storage element nodes 242, 254) of the respective data centers. In some examples, replication details 372 for storage volume 330A may also be included in storage volume replication information (e.g., storage volume replication information 124 from FIG. 1, storage volume replication information 224 from FIGS. 2A-2B) stored by a storage microservice.

As used herein, meta information may include, for example, but not limited to, an indication of a total storage available for the storage volume, an indication of a storage available for each of the plurality of different data centers, a storage used for each of the plurality of different data centers, a number of data servers of the plurality of different data centers that are available in a storage layer, a data summary of chunks for the storage volume, an indication of a trash space in a time interval for the storage volume, an indication of data chunk copies in a time interval for the storage volume, an indication of files and directories available in the storage layer for the storage volume, an indication of disks available for the storage volume, an indication of maximum read and write times for the storage volume, an indication of read and write operations for the storage volume, or other meta information.

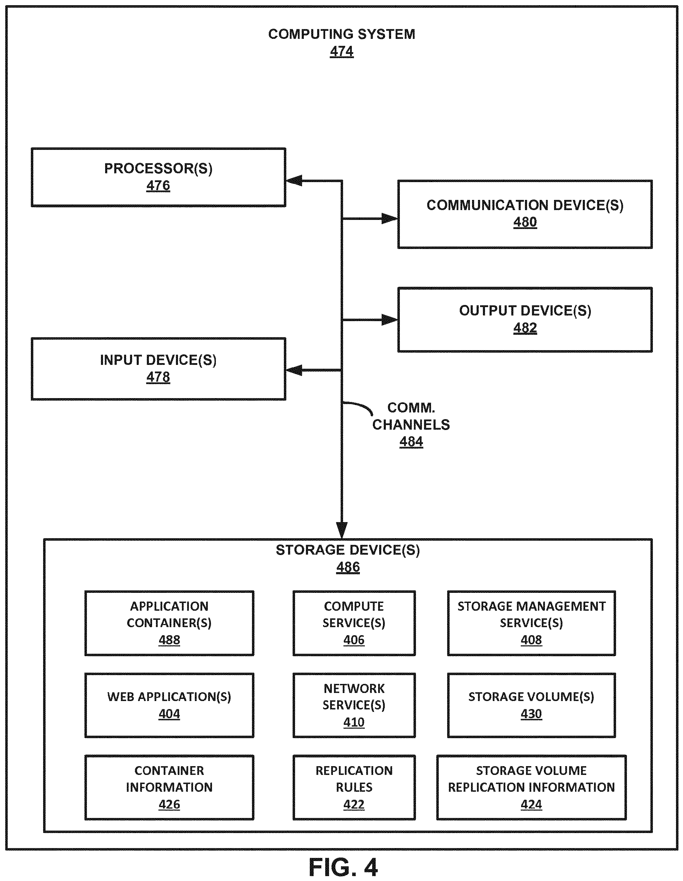

FIG. 4 is a block diagram illustrating an example computing system 474, in accordance with one or more techniques of the disclosure. Computing system 474 may include or implement one or more of the nodes, containers, applications, and/or services described herein and shown in FIGS. 1 and 2A-2B, such as one or more of nodes 112, controller node 102, application containers 114 or 116, web applications 104, compute services 106, storage management services 108 (including storage service 128 and storage microservice 120), network services 110, node 212A, node 212M, application containers 214 or 216, storage service 228, and/or storage microservice 220. FIG. 4 illustrates only one particular example of computing system 474, and many other examples of computing system 474 may be used in other instances and may include a subset of the components shown, or may include additional components not shown, in FIG. 4.

As shown in the example of FIG. 4, computing system 474 includes one or more processors 476, one or more input devices 478, one or more communication devices 480, one or more output devices 482, and one or more storage devices 486. In some examples, computing system 474 may not include input devices 478 and/or output devices 482. Communication channels 484 may interconnect each of the components 476, 480, 478, 482, and 486 for inter-component communications (physically, communicatively, and/or operatively). In some examples, communication channels 484 may include a system bus, a network connection, an inter-process communication data structure, or any other method for communicating data between hardware and/or software.

One or more input devices 478 of computing system 474 may receive input. Examples of input are tactile, audio, and video input. Examples of input devices 478 include a presence-sensitive screen, touch-sensitive screen, mouse, keyboard, voice responsive system, video camera, microphone or any other type of device for detecting input from a human or machine.

One or more output devices 482 of computing system 474 may generate output. Examples of output are tactile, audio, and video output. Examples of output devices 482 include a presence-sensitive screen, sound card, video graphics adapter card, speaker, cathode ray tube (CRT) monitor, liquid crystal display (LCD), or any other type of device for generating output to a human or machine. Output devices 482 may include display devices such as cathode ray tube (CRT) monitor, liquid crystal display (LCD), or any other type of device for generating tactile, audio, and/or visual output.

One or more communication devices 480 of computing system 474 may communicate with one or more other computing systems or devices via one or more networks by transmitting and/or receiving network signals on the one or more networks. Examples of communication devices 480 include a network interface card (e.g. such as an Ethernet card), an optical transceiver, a radio frequency transceiver, or any other type of device that can send and/or receive information, such as through a wired or wireless network. Other examples of communication devices 480 may include short wave radios, cellular data radios, wireless Ethernet network radios, as well as universal serial bus (USB) controllers.

One or more storage devices 486 within computing system 474 may store information for processing during operation of computing system 474 (e.g., computing system 474 may store data accessed by one or more modules, processes, applications, services, nodes, application containers, or the like during execution at computing system 474). In some examples, storage devices 486 on computing system 474 may be configured for short-term storage of information as volatile memory and therefore not retain stored contents if powered off. Examples of volatile memories include random access memories (RAM), dynamic random access memories (DRAM), static random access memories (SRAM), and other forms of volatile memories known in the art. In some cases, storage devices 486 may include redundant array of independent disks (RAID) configurations and one or more solid-state drives (SSD's).

Storage devices 486, in some examples, also include one or more computer-readable storage media. Storage devices 486 may be configured to store larger amounts of information than volatile memory. Storage devices 486 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage devices 486 may store program instructions and/or data associated with one or more software/firmware elements or modules.

For example, storage devices 486 may store container information 426, replication rules 422, and storage volume replication information 424. In addition, storage devices 486 may store instructions and/or data associated with application containers 488, web applications 404, compute services 406, network services 410, storage management services 408, and storage volumes. The components stored in storage devices 486 may be examples of similarly named components shown in FIG. 1, FIG. 2A, and/or FIG. 2B.

Computing system 474 further includes one or more processors 476 that may implement functionality and/or execute instructions within computing system 474. For example, processors 476 may receive and execute instructions stored by storage devices 486 that execute the functionality of the elements and/or modules described herein. These instructions executed by processors 476 may cause computing system 474 to store information within storage devices 486 during program execution. Processors 476 may also execute instructions of an operating system to perform one or more operations described herein. For example, processors 476 may be configured to determine meta information for each of different data centers 132 and to output, for display, a dashboard that includes a graphical representation of one of storage volumes 130 and, for each of different data centers 132, a graphical element identifying the respective data center containing application data for the associated with the one storage volume of storage volumes 130.

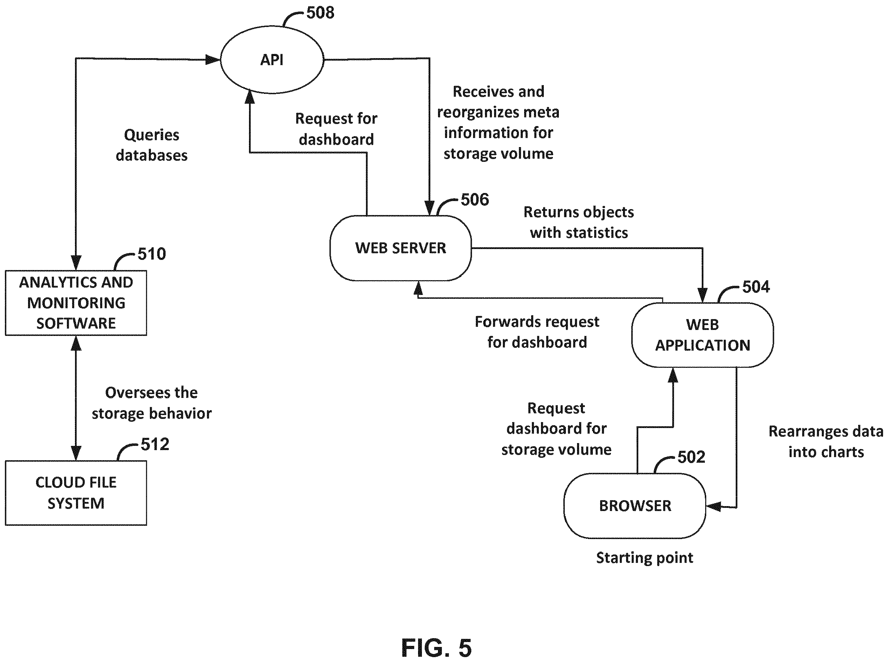

FIG. 5 is a flow diagram illustrating an example process to determine meta information, in accordance with one or more techniques of the disclosure. The example process illustrated in FIG. 5 may be performed by one or more computing systems, such as computing system 474 illustrated in FIG. 4 that may include or implement one or more of the nodes, containers, applications, and/or services described herein and shown in FIGS. 1 and 2A-2B. As shown in the example of FIG. 5, browser 502 (e.g., in client device 138) requests a dashboard for a storage volume from web application 504 (e.g., one of web applications 104). Web Application 504 forwards the request for the dashboard to web server 506.

Web server 506 may be configured to execute multiple Application Programming Interface (API) calls to API 508 for analytics and monitoring software 510 (e.g., executed by storage service 108), and rearrange the meta information returned by API 508 in the backend to present resourceful sets of information that can be easily presented in browser 502 in form of indicators or charts. Web server 506 may be configured to transform the meta information that comes in specific units (bytes, a data and/or time for the meta information, etc.) into arrays of commonly used indicators to display the amount of storage available across data centers, the amount of used storage in the entire infrastructure, the existing disks, and more. The meta information collected by web server 506 may be fetched at any moment and may be followed and filtered as needed.

Web server 506 retrieves the meta information using API 508 of analytics and monitoring software 510. For example, API 508 queries one or more databases of analytics and monitoring software 512 to retrieve meta information for the storage volume. Analytics and monitoring software 512 may be configured to oversee storage behavior of the storage volume at cloud file system 512 (e.g., data centers 132). Although the example of FIG. 5 uses an API to query databases of analytics and monitoring software 512 to retrieve meta information for the storage volume, in some examples, web server 506 may be configured to retrieve the meta information directly from analytics and monitoring software 510.

API 508 receives the meta information for the storage volume, reorganizes the meta information for the dashboard, and forwards the meta information for the dashboard to web server 506. Web server 506 returns objects with statistics for the dashboard. Web application 504 rearranges the objects with statistics for the dashboard into charts and browser 502 outputs the dashboard, such as the dashboard shown FIG. 6, FIG. 7, and/or FIG. 8.

FIG. 6 is a screen diagram illustrating example details of a home screen for one or more storage volumes, in accordance with one or more techniques of the disclosure. While the example of FIG. 6 may refer to one or more of storage volumes 130, the home screen of FIG. 6 may be for other storage volumes. The screen diagram illustrated in FIG. 6 includes a graphical window 602 that may be output for display in a graphical user interface. For example, a client device (e.g., client device 138 shown in FIG. 1) may output a graphical user interface that includes graphical window 602 when executing a web application in a web browser, such as one of web applications 104 provided by controller node 102.

For any of the example graphical windows illustrated in FIGS. 6-8, the web browser of client device 138 may send requests to web applications 104, which may process and forward these requests to storage management services 108 illustrated in FIG. 1. Storage management services 108 may handle the requests and send responses to web applications 104, which provides the responses back to client device 138, including an output of the information included in the graphical windows illustrated in FIGS. 6-8. As a result, client device 138 may output a graphical user interface that includes these graphical windows.

Graphical window 602 of FIG. 6 includes example details of various storage volumes. In some cases, information for each volume may be presented in a paginated and searchable table. As shown in FIG. 6, graphical window 602 includes a storage field 604, which may include a total storage field 610 indicating a total (e.g., used and available) storage of a storage volume, available storage field 612 indicating an amount of data storage available at the storage volume, used storage field 614 indicating an amount of data storage used at the storage volume, data servers field 616 indicating a number of different data centers storing replicated version of application data associated with the storage volume, data chunk summary field 618 indicating an amount of unsafe and/or lost data chunks for the storage volume, and cloud field 620. Unsafe data chunks may refer to data that may have been corrupted. Lost data chunks may refer to data chunks that are no longer available.

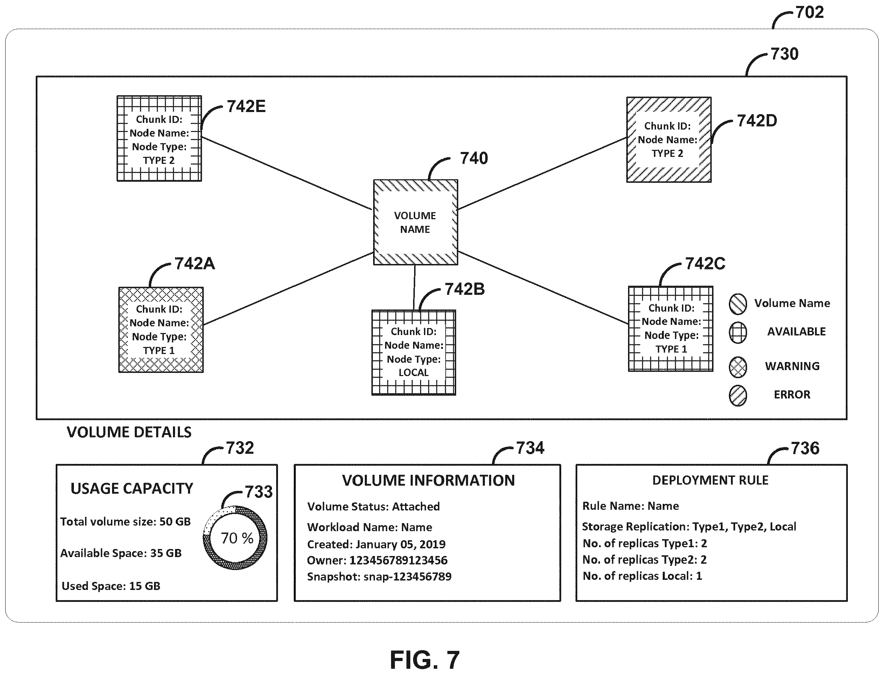

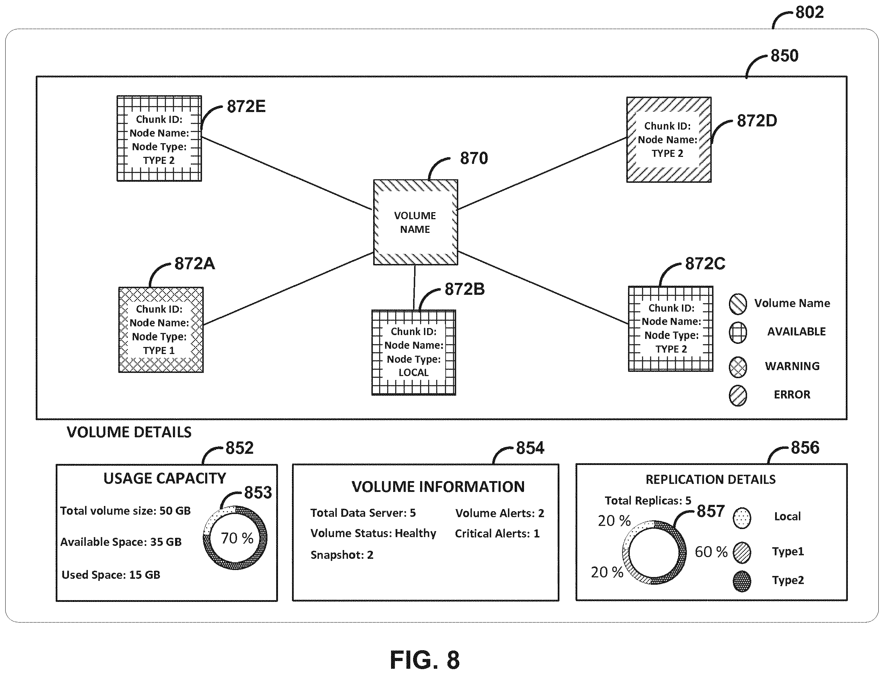

As shown, cloud field 620 may include graphical elements that when selected refresh stats illustrated in storage field 604, change to view another storage volume, and/or view details about cloud storage (e.g., data centers 132). For example, selecting the graphical element "cloud storage" or "volumes" may open a dashboard illustrated in FIG. 7 or FIG. 8.

FIG. 7 is a screen diagram illustrating an example screen showing a first dashboard with different panels, in accordance with one or more techniques of the disclosure. Graphical window 702 of FIG. 7 includes example details of various storage volumes. In some cases, information for each volume may be presented in a paginated and searchable table. As shown in FIG. 7, graphical window 702 includes a volume details field 730, usage capacity field 732, volume information field 734, and deployment rule field 736.

Volume details field 730 may include a graphical representation 740 of the storage volume and graphical elements 742A-742E (collectively, "graphical elements 742"). Graphical representation 740 of the storage volume may include a volume name. Graphical elements 742 may each identify a respective data center of different data centers 132 or 232. In the example of FIG. 7, each one of graphical elements 742 may indicate a status for the respective data center. Examples of a status for a respective data center may include, for example, but is not limited to, available, warning, error, or another status. A warning status may indicate that an amount of available storage capacity of the respective data center for application data associated with the storage volume is less than a storage threshold. That is, the warning status may indicate that an amount of available storage capacity of the respective data center for application data associated with the storage volume is almost full. A warning status may indicate that there is no further available storage capacity for the application data associated with the storage volume at the respective data center.

In the example of FIG. 7, graphical element 742A may indicate data center 132A has a warning status, graphical element 742B may indicate data center 132B has an available status, graphical element 742C may indicate data center 132C has an available status, graphical element 742D may indicate data center 132D has an error status, and graphical element 742E may indicate data center 132E has an available status. Although the example of FIG. 7 illustrates five data centers, in other examples, less than five data centers or more than five data centers may be used.

Although FIG. 7 illustrates graphical elements 742 as indicating a status using a fill type, in some examples, graphical elements 742 may indicate a status using a color. For example, graphical elements 742 may include a green color to indicate an available status, a yellow color to indicate a warning status, and/or a red color to indicate an error status.

As shown, each one of graphical elements 742 may include a chunk ID entry. A chunk ID may refer to a unique alphanumeric code assigned by a respective data center of data centers 132 to the storage volume identified by graphical representation 740. For example, data center 132A may assign a chunk ID for application data associated with storage volume 130A and graphical element 742 may show the chunk ID assigned by data center 132A for application data associated with storage volume 130A. Although the example of FIG. 7 illustrates text, in some examples, chunk ID may be an icon or graphic.

Each one of graphical elements 742 may include a node name entry. A node name may refer to a unique name assigned by storage service 108 to a data center of data centers 132. For example, storage service 108 may assign a node name for data center 132A and graphical element 742 may show the node name assigned by storage volume 130A for application data center 132A. Although the example of FIG. 7 illustrates text, in some examples, node name may be an icon or graphic.

As shown, graphical elements 742 may each include a node type (or simply "type") entry that identifies node type of the respective data center of different data centers 132 on which the storage volume is generated. A node type of a data center which the storage volume is generated may, for example, represent a company, framework, and/or private network associated with the data center. A "local" type can mean an on-premises data center that is local to client devices 138. Although the example of FIG. 7 illustrates text, in some examples, node type may be an icon or graphic. A storage volume may be replicated one time on a single node type or multiple times (e.g., 2, 3, 4, etc.) on a single node type.

Usage capacity field 732 may include an indication 733 of the usage capacity for the storage volume. As shown, indication 733 may be a ring chart. In some examples, usage capacity field 732 may include one or more of a total size of the storage volume, a current available space, or an amount of used space.

Volume information field 734 may include one or more of a storage volume status (e.g., attached), a workload name for the application container attached to the storage volume, a creation date for the storage volume, an owner associated with the storage volume, or a link to a snapshot view for displaying a state of data associated with the storage volume at a particular point in time.

Deployment rule field 736 may represent an indication of a replication rule for the storage volume. Deployment rule field 736 may include a replication rule name, names or replication types used for storing application data associated with the storage volume, and a number of replicas of the application data associated with the storage volume for each type of data center of the plurality of different data centers. The deployment rule may outline which types of data centers will replicate the data associated with the storage volume, and the number of replicas for each of these data center types. Deployment rule field 736 shows that three different types (e.g., Type1, Type2, Local) of data centers will replicate the data associated with the storage volume (one of which is a local/onsite data center), and then the info shown below in deployment rule field 736 indicates the total number of replicas broken out by data center type (e.g., five replicas total).

FIG. 8 is a screen diagram illustrating an example screen showing a second dashboard with different panels, in accordance with one or more techniques of the disclosure. Graphical window 802 of FIG. 8 includes example details of various storage volumes. In some cases, information for each volume may be presented in a paginated and searchable table. As shown in FIG. 8, graphical window 802 includes a data center field 850, which may be similar to volume details field 730, usage capacity field 852, volume information field 854, and replication details field 856.

Data center field 850 may include a graphical representation 870 of the storage volume and graphical elements 872A-872E (collectively, "graphical elements 872"). Graphical representation 870 of the storage volume may include a volume name. Graphical elements 872 may each identify a respective data center of different data centers 132 or 232. In the example of FIG. 8, each one of graphical elements 872 may indicate a status for the respective data center. Examples of a status for a respective data center may include, for example, but is not limited to, available, warning, error, or another status. A warning status may indicate that an amount of available storage capacity of the respective data center for application data associated with the storage volume is less than a storage threshold. That is, the warning status may indicate that an amount of available storage capacity of the respective data center for application data associated with the storage volume is almost full. A warning status may indicate that there is no further available storage capacity for the application data associated with the storage volume at the respective data center.

In the example of FIG. 8, graphical element 872A may indicate data center 132A has a warning status, graphical element 872B may indicate data center 132B has an available status, graphical element 872C may indicate data center 132C has an available status, graphical element 872D may indicate data center 132D has an error status, and graphical element 872E may indicate data center 132E has an available status. Although the example of FIG. 8 illustrates five data centers, in other examples, less than five data centers or more than five data centers may be used.

Although FIG. 8 illustrates graphical elements 872 as indicating a status using a fill type, in some examples, graphical elements 872 may indicate a status using a color. For example, graphical elements 872 may include a green color to indicate an available status, a yellow color to indicate a warning status, and/or a red color to indicate an error status.

Usage capacity field 852 may include an indication 853 of the usage capacity for the storage volume. As shown, indication 853 may be a ring chart. In some examples, usage capacity field 852 may include one or more of a total size of the storage volume, a current available space, or an amount of used space.

Volume information field 854 may include an entry for a total number of data servers for a storage volume. The total number of data servers may represent a number of data centers 132 that store application data associated with a storage volume identified by graphical representation 870. For example, the total number of data servers may be five when data centers 132A-132E store application data associated with storage volume 130A, which is identified by graphical representation 870.

Volume information field 854 may include an entry for a number of alerts for the storage volume.

Volume information field 854 may include an entry for a status for the storage volume. For example, a status for the storage volume may include healthy.

Volume information field 854 may include an entry for a number of critical alerts for the storage volume.

Volume information field 854 may include an entry for a number of snapshots for the storage volume. A snapshot may refer to a state of application data for a storage volume at a respective time and date.

Replication details field 856 may represent an indication of a replication rule for the storage volume. Replication details field 856 may include a graphical element 857 indicating a number of replicas of the application data associated with the storage volume for each type of data center of the plurality of different data centers. The deployment rule may outline which types of data centers will replicate the data associated with the storage volume, and the number of replicas for each of these data center types. Deployment rule field 856 shows that three different types (e.g., Type1, Type2, Local) of data centers will replicate the data associated with the storage volume (one of which is a local/onsite data center), and then the info shown below in deployment rule field 736 indicates the total number of replicas broken out by data center type (e.g., 5 replicas total).

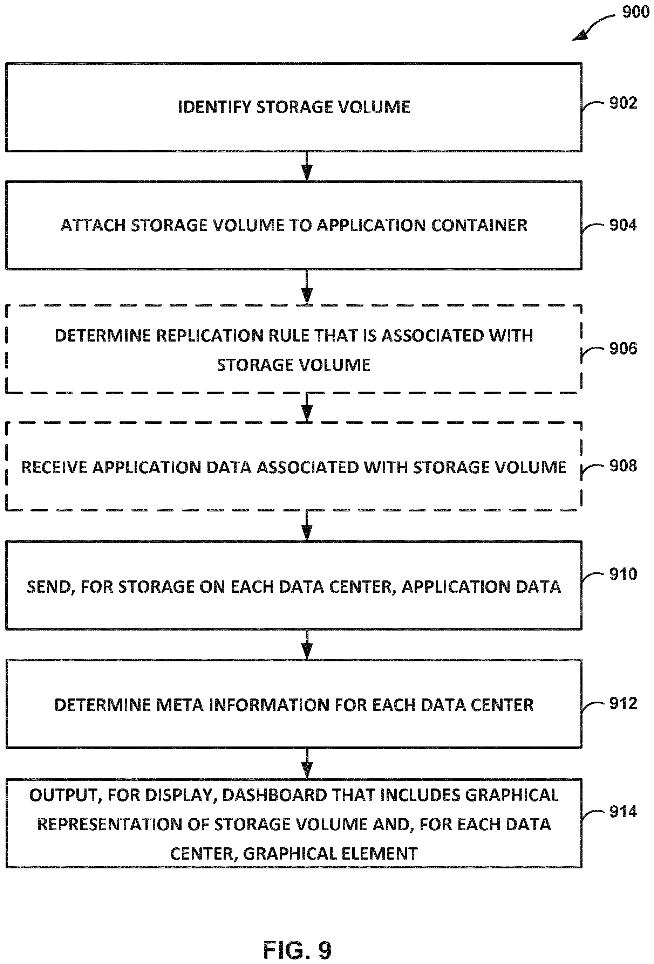

FIG. 9 is a flow diagram illustrating an example process to identify and output, for display, a dashboard for graphically presenting a relationship between a storage volume and each of data center that store replicas of application data associated with the storage volume, in accordance with one or more techniques of the disclosure. The example process illustrated in FIG. 9 may be performed by one or more computing systems, such as computing system 474 illustrated in FIG. 4 that may include or implement one or more of the nodes, containers, applications, and/or services described herein and shown in FIGS. 1 and 2A-2B.

As shown in the example of FIG. 9, process 900 includes identifying (902), by one or more processors, a storage volume (e.g., one of storage volumes 130). In some cases, process 900 includes creating the storage volume in response to receiving a request to create the storage volume from a user of a client device (e.g., client device 138) via a user interface provided by a web application (e.g., one or more of web applications 104). Process 900 further includes attaching (904), by the one or more processors, the storage volume to an application container (e.g., application container 214) which one or more applications are executable.

Process 900 may optionally include determining (906), by the one or more processors, a replication rule (e.g., one of replication rules 222) associated with the storage volume. Process 900 may optionally include receiving (908), by the one or more processors, application data associated with the storage volume. Process 900 includes sending (910), by the one or more processors, and for storage on each of the plurality of different data centers (e.g., data centers 132) the application data associated with the storage volume, such that the application data is stored (e.g., in storage elements 244, 254) and replicated on each of the plurality of different data centers. Sending (910) the application data associated with the storage volume may be optionally based on the replication rule.

Process 900 further includes, after sending the application data, determining (912), by the one or more processors, meta information for each of the plurality of different data centers and outputting (914), by the one or more processors and for display, a dashboard that includes a graphical representation (e.g., graphical representation 740 or 870) of the storage volume and, for each of the plurality of different data centers, a graphical element (e.g., graphical elements 742 or 872) identifying the respective data center. In some examples, the graphical representation of the storage volume is graphically connected to each of the plurality of graphical elements identifying the respective data center. FIGS. 6-8 provide examples of graphical windows that be output for display at a client device.

In some examples, process 900 includes determining, by the one or more processors, a replication rule associated with the storage volume, wherein the replication rule identifies the plurality of different data centers on which to store application data associated with the storage volume. In such examples, sending (910) the application data may be based on the replication rule.

Process 900 may include retrieving the replication information using an API that oversees storage behavior of the storage volume at the plurality of different data centers (e.g., data centers 132).

Process 900 may include generating the dashboard to include a graphical element (e.g., graphical elements 742 or 872) of one respective data center that indicates a warning status in the dashboard for the one respective data center. In some examples, process 900 may include generating the dashboard to include a graphical element of one respective data center that indicates a warning status in the dashboard for the one respective data center by including a color (e.g., yellow) associated with the warning status. In some examples, the warning status in the dashboard indicates that an amount of available storage capacity of the one respective data center for the application data associated with the storage volume is less than a storage threshold.

In some examples, process 900 includes generating the dashboard to include a graphical element (e.g., graphical elements 742 or 872) of one respective data center that indicates an error status in the dashboard for the one respective data center. In some examples, process 900 may include generating the dashboard to include a graphical element of one respective data center that indicates a warning status in the dashboard for the one respective data center by including a color (e.g., red) associated with the error status. In some examples, the error status in the dashboard indicates that there is no further available storage capacity for the application data associated with the storage volume at the one respective data center.

In some examples, process 900 includes calculating a usage capacity for the storage volume using the meta information. For example, process 900 subtracts a used space for the storage volume that is specified by the meta information from a total volume size for the storage volume that is specified by the meta information. In some examples, the dashboard includes an indication of the usage capacity for the storage volume (e.g., usage capacity field 732 or 852), where the usage capacity includes a total size of the storage volume, a current available space, and an amount of used space.

In some examples, process 900 includes determining, using the meta information, a number of replicas of the application data associated with the storage volume for each type of data center of the plurality of different data centers, where the dashboard includes an indication of the number of replicas for each type of data center (e.g., deployment rule field 736 or replication field details 856).

In some examples, process 900 includes generating the dashboard to include one or more of a workload name for the application container attached to the storage volume, an owner associated with the storage volume, or a link to a snapshot view for displaying a state of data associated with the storage volume at a particular point in time (e.g., volume information field 734).

In some examples, process 900 includes determining the meta information for each data center includes determining meta information that includes one or more of an indication of a total storage available for the storage volume, an indication of a storage available for each of the plurality of different data centers, a storage used for each of the plurality of different data centers, a number of data servers of the plurality of different data centers that are available in a storage layer, a data summary of chunks for the storage volume, an indication of a trash space in a time interval for the storage volume, an indication of data chunk copies in a time interval for the storage volume, an indication of files and directories available in the storage layer for the storage volume, an indication of disks available for the storage volume, an indication of maximum read and write times for the storage volume, and an indication of read and write operations for the storage volume.

In some examples, process 900 includes generating the dashboard to include a graphical element (e.g., a node type field in graphical elements 742 or 872) that indicates a type of the respective data center on which the storage volume is replicated.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable medium carrying instructions. Instructions embedded or encoded in a computer-readable medium may cause a programmable processor, or other processor, to perform the method, e.g., when the instructions are executed. Computer-readable media may include non-transitory computer-readable storage media and transient communication media, such as a carrier signal or a transmission medium. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. The term "computer-readable storage media" refers to physical storage media, and not signals, carrier waves, or other transient media.

Various examples have been described. These and other examples are within the scope of the following claims.

Thus, from one perspective, there has now been described an example method which includes identifying a storage volume, attaching the storage volume to an application container in which one or more applications are executable, sending, for storage on each of a plurality of different data centers, application data associated with the storage volume, such that the application data is stored and replicated on each of the plurality of different data centers, after sending the application data, determining meta information for each of the plurality of different data centers, and outputting, for display and based on the meta information, a dashboard that includes a graphical representation of the storage volume and, for each of the plurality of different data centers, a graphical element identifying the respective data center. The graphical representation of the storage volume is graphically connected to each of the plurality of graphical elements identifying the respective data center.

Further examples of feature combinations taught by the present disclosure are set out in the following numbered clauses:
1. A method comprising:
   identifying, by one or more processors, a storage volume;
   attaching, by the one or more processors, the storage volume to an application container in which one or more applications are executable;
   sending, by the one or more processors, and for storage on each of a plurality of different data centers, application data associated with the storage volume, such that the application data is stored and replicated on each of the plurality of different data centers;
   after sending the application data, determining, by the one or more processors, meta information for each of the plurality of different data centers; and
   outputting, by the one or more processors and for display, based on the meta information, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.
2. The method of clause 1, further comprising:
   determining, by the one or more processors, and based on the meta information, a replication rule associated with the storage volume, wherein the replication rule identifies the plurality of different data centers on which to store the application data associated with the storage volume,
   wherein sending the application data is based on the replication rule.
3. The method of clause 2, wherein the dashboard includes an indication of the replication rule.
4. The method of any of clauses 1 to 3, wherein determining the meta information comprises:
   retrieving the meta information using an Application Programming Interface (API) of an analytics and monitoring software that oversees storage behavior of the storage volume at the plurality of different data centers.
5. The method of any of clauses 1 to 4, wherein determining the meta information comprises:
   retrieving the meta information directly from an analytics and monitoring software that oversees storage behavior of the storage volume at the plurality of different data centers.
6. The method of any of clauses 1 to 5, wherein the graphical element of one respective data center indicates a warning status in the dashboard for the one respective data center.
7. The method of clause 6, wherein the graphical element of the one respective data center indicates the warning status in the dashboard by including a color associated with the warning status.
8. The method of clause 6, wherein the warning status in the dashboard indicates that an amount of available storage capacity of the one respective data center for the application data associated with the storage volume is less than a storage threshold.
9. The method of any of clauses 1 to 8, wherein the graphical element of one respective data center indicates an error status in the dashboard for the one respective data center.
10. The method of clause 9, wherein the graphical element of the one respective data center indicates the error status in the dashboard by including a color associated with the error status.
11. The method of clause 9, wherein the error status in the dashboard indicates that there is no further available storage capacity for the application data associated with the storage volume at the one respective data center.
12. The method of any of clauses 1 to 11, further comprising:
   calculating a usage capacity for the storage volume using the meta information, wherein the dashboard includes an indication of the usage capacity for the storage volume, and wherein the usage capacity includes a total size of the storage volume, a current available space for the storage volume, and an amount of used space for the storage volume.
13. The method of any of clauses 1 to 12, further comprising:
   determining, using the meta information, a number of replicas of the application data associated with the storage volume for each type of data center of the plurality of different data centers, wherein the dashboard includes an indication of the number of replicas for each type of data center.
14. The method of any of clauses 1 to 13, wherein the dashboard includes one or more of a workload name for the application container attached to the storage volume, an owner associated with the storage volume, or a link to a snapshot view for displaying a state of data associated with the storage volume at a particular point in time.
15. The method of any of clauses 1 to 14, wherein the meta information includes an indication of a total storage available for the storage volume, an indication of a storage available for each of the plurality of different data centers, a storage used for each of the plurality of different data centers, a number of data servers of the plurality of different data centers that are available in a storage layer, a data summary of chunks for the storage volume, an indication of a trash space in a time interval for the storage volume, an indication of data chunk copies in a time interval for the storage volume, an indication of files and directories available in the storage layer for the storage volume, an indication of disks available for the storage volume, an indication of maximum read and write times for the storage volume, and an indication of read and write operations for the storage volume.
16. The method of any of clauses 1 to 15, wherein the graphical element indicates a type of the respective data center on which the storage volume is replicated.
17. A computing system, comprising:
   one or more processors; and
   at least one computer-readable storage medium storing instructions that, when executed, cause the one or more processors to:
      identify a storage volume;
      attach the storage volume to an application container in which one or more applications are executable;
      send, for storage on each of a plurality of different data centers, application data associated with the storage volume, such that the application data is stored and replicated on each of the plurality of different data centers;
      after sending the application data, determine meta information for each of the plurality of different data centers; and
      output, for display and based on the meta information,, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.
18. The computing system of clause 17, wherein the instructions further cause the one or more processors to:
   determine, based on the meta information, a replication rule associated with the storage volume, wherein the replication rule identifies the plurality of different data centers on which to store the application data associated with the storage volume,
   wherein sending the application data is based on the replication rule.
19. The computing system of clause 17 or 18, wherein the instructions further cause the one or more processors to:
   determine, using the meta information, a number of replicas of the application data associated with the storage volume for each type of data center of the plurality of different data centers, wherein the dashboard includes an indication of the number of replicas for each type of data center.
20. A computer-readable storage medium storing instructions that are executable by at least one processor to:
   identify a storage volume;
   attach the storage volume to an application container in which one or more applications are executable;
   send, for storage on each of a plurality of different data centers, application data associated with the storage volume, such that the application data is stored and replicated on each of the plurality of different data centers;
   after sending the application data, determine meta information for each of the plurality of different data centers; and
   output, for display and based on the meta information, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.

## Claims

1. A method comprising:
identifying, by one or more processors, a storage volume;
attaching, by the one or more processors, the storage volume to an application container in which one or more applications are executable;
sending, by the one or more processors, and for storage on each of a plurality of different data centers, application data associated with the storage volume, such that the application data is stored and replicated on each of the plurality of different data centers;
after sending the application data, determining, by the one or more processors, meta information for each of the plurality of different data centers; and
outputting, by the one or more processors and for display, based on the meta information, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.

2. The method of claim 1, further comprising:
determining, by the one or more processors, and based on the meta information, a replication rule associated with the storage volume, wherein the replication rule identifies the plurality of different data centers on which to store the application data associated with the storage volume,
wherein sending the application data is based on the replication rule.

3. The method of claim 2, wherein the dashboard includes an indication of the replication rule.

4. The method of any of claims 1 to 3, wherein determining the meta information comprises:
retrieving the meta information using an Application Programming Interface (API) of an analytics and monitoring software that oversees storage behavior of the storage volume at the plurality of different data centers.

5. The method of any of claims 1 to 4, wherein determining the meta information comprises:
retrieving the meta information directly from an analytics and monitoring software that oversees storage behavior of the storage volume at the plurality of different data centers.

6. The method of any of claims 1 to 5, wherein the graphical element of one respective data center indicates a warning status in the dashboard for the one respective data center.

7. The method of claim 6, wherein the warning status in the dashboard indicates that an amount of available storage capacity of the one respective data center for the application data associated with the storage volume is less than a storage threshold.

8. The method of any of claims 1 to 7, wherein the graphical element of one respective data center indicates an error status in the dashboard for the one respective data center.

9. The method of any of claims 1 to 8, further comprising:
calculating a usage capacity for the storage volume using the meta information, wherein the dashboard includes an indication of the usage capacity for the storage volume, and wherein the usage capacity includes a total size of the storage volume, a current available space for the storage volume, and an amount of used space for the storage volume.

10. The method of any of claims 1 to 9, further comprising:
determining, using the meta information, a number of replicas of the application data associated with the storage volume for each type of data center of the plurality of different data centers, wherein the dashboard includes an indication of the number of replicas for each type of data center.

11. The method of any of claims 1 to 10, wherein the dashboard includes one or more of a workload name for the application container attached to the storage volume, an owner associated with the storage volume, or a link to a snapshot view for displaying a state of data associated with the storage volume at a particular point in time.

12. The method of any of claims 1 to 11, wherein the meta information includes an indication of a total storage available for the storage volume, an indication of a storage available for each of the plurality of different data centers, a storage used for each of the plurality of different data centers, a number of data servers of the plurality of different data centers that are available in a storage layer, a data summary of chunks for the storage volume, an indication of a trash space in a time interval for the storage volume, an indication of data chunk copies in a time interval for the storage volume, an indication of files and directories available in the storage layer for the storage volume, an indication of disks available for the storage volume, an indication of maximum read and write times for the storage volume, and an indication of read and write operations for the storage volume.

13. The method of any of claims 1 to 12, wherein the graphical element indicates a type of the respective data center on which the storage volume is replicated.

14. A computing system, comprising:
one or more processors; and
at least one computer-readable storage medium storing instructions that, when executed, cause the one or more processors to:
identify a storage volume;
attach the storage volume to an application container in which one or more applications are executable;
send, for storage on each of a plurality of different data centers, application data associated with the storage volume, such that the application data is stored and replicated on each of the plurality of different data centers;
after sending the application data, determine meta information for each of the plurality of different data centers; and
output, for display and based on the meta information,, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.

15. A computer-readable storage medium storing instructions that are executable by at least one processor to:
identify a storage volume;
attach the storage volume to an application container in which one or more applications are executable;
send, for storage on each of a plurality of different data centers, application data associated with the storage volume, such that the application data is stored and replicated on each of the plurality of different data centers;
after sending the application data, determine meta information for each of the plurality of different data centers; and
output, for display and based on the meta information, a dashboard that includes a graphical representation of the storage volume and, for each of the plurality of different data centers, a graphical element identifying the respective data center, wherein the graphical representation of the storage volume is graphically connected to each of the plurality of graphical elements identifying the respective data center.
